# EUROPÄISCHE PATENTSCHRIFT

(11) **EP 1 912 833 B1**
(45) Veröffentlichungstag und Bekanntmachung des Hinweises auf die Patenterteilung: **27.05.2009**
(21) Anmeldenummer: 07723396.3
(22) Anmeldetag: 14.03.2007
(51) Int. Cl.: B60R 21/20, B60R 21/217

(54) **BEFESTIGUNGSANORDNUNG IN EINEM AIRBAGMODUL**
SECURING ARRANGEMENT IN AN AIRBAG MODULE
DISPOSITIF DE FIXATION DANS UN MODULE AIRBAG

(30) Priorität: 22.03.2006 DE 102006013990
(43) Veröffentlichungstag der Anmeldung: 23.04.2008
(73) Patentinhaber: Takata-Petri AG, 63743 Aschaffenburg (DE)
(72) Erfinder: WEIGAND, Steffen, 63739 Aschaffenburg (DE); SAUER, Frank, 63843 Niedernberg (DE); HAMELS, Stefan, 63743 Aschaffenburg (DE); GLAAB, Ralf, 63829 Krombach (DE)
(74) Vertreter: Baumgärtel, Gunnar
(86) Internationale Anmeldenummer: PCT/EP2007/002429
(87) Internationale Veröffentlichungsnummer: WO 2007/107325

(56) Entgegenhaltungen:
- EP-A- 0 865 974
- DE-A1- 19 804 579
- DE-A1- 19 943 368
- DE-U1-2202004 002 69
- US-A- 5 709 401
- US-A1- 2005 230 938

## Beschreibung

Die Erfindung betrifft einen Airbagmodul nach dem Oberbegriff des Anspruchs 1.

Aus der Praxis ist es bekannt, den Generatorträger und die Abdeckkappe eines Airbagmoduls durch Verrasten miteinander zu verbinden. Der Gasgenerator und der Gassack werden aber bei diesen Airbagmodulen noch mittels Bolzen oder Muttern befestigt. Dadurch entsteht zusätzlicher Montageaufwand.

Zur Vereinfachung der Befestigung, von Generatorträger, Gassack und Abdeckkappe im Airbagmodul ist aus der gattungsgemäßen DE 198 04 579 A1 und aus dem US-Patent 5 709 401 bekannt, diese drei Baugruppen mittels Haken miteinander zu verbinden. Hierzu sind an einem Seitenrand der Abdeckkappe und im Bereich des Einblasmundes des Gassacks Schlitze vorhanden, in die bei der Montage Haken am Generatorträger greifen. Zur Sicherung werden diese Haken nach der Montage der drei Baugruppen umgebogen. Obwohl die drei Baugruppen in einem Arbeitsgang montiert werden können, stellt das Umbiegen der Haken einen zusätzlichen Arbeitsgang dar.

Der Erfindung liegt die Aufgabe zugrunde, die Befestigung von Generatorträger, Gassack und Abdeckkappe im Airbagmodul, insbesondere in einem Fahrerairbagmodul weiter zu vereinfachen.

Erfindungsgemäß wird das gemäß den Merkmalen des Anspruchs 1 erreicht.
Danach ist bei einem Airbagmodul mit einem Gasgenerator, der mindestens einen seitlich über diesen hinausragenden Befestigungsabschnitt aufweist, mit einem Generatorträger, mit einem Gassack mit Einblasmund, mit einer Abdeckkappe, und mit Rastelementen zur Verbindung des Generatorträgers mit der Abdeckkappe, erfindungsgemäß vorgesehen, dass der Gassack im Bereich des Einblasmundes eine Platte aufweist, dass die Platte eine Öffnung für den Gasgenerator aufweist, und dass Mittel zur Halterung der Platte und des mit dieser verbundenen Gassacks sowie zur Halterung des Befestigungsabschnitts des Gasgenerators zwischen dem Generatorträger und der Platte mittels der Rastelemente vorgesehen sind, wobei die Platte mindestens im Bereich dieser Mittel zur Halterung größer ist als die Außenabmessung des gefalteten Gassacks im Bereich des Einblasmundes

Der Vorteil dieser Anordnung besteht darin, dass nicht nur der Gasgeneratorträger und die Abdeckkappe durch eine Rastverbindung miteinander verbunden werden, sondern dass mittels dieser Rastverbindung auch der Gassack und der Gasgenerator im Airbagmodul befestigt werden. Weiterhin sind nach dem Einrasten der Rastelemente keine weiteren Arbeiten zur Sicherung der Verbindung erforderlich.

Als Platte kann ein Flansch eines Diffusors vorgesehen sein. Die Platte kann zur Befestigung des Gassacks Positionierstege aufweisen. Als Positionierstege können Abschnitte der Platte vorgesehen sein, wobei die Abschnitte teilweise von der Platte getrennt und gegenüber dieser zumindest teilweise verformbar sind. Die Positionierstege können zumindest annähernd parallel zum Plattenrand verlaufen. Sie können aber auch zumindest annähernd in Richtung der Plattenmitte verlaufen.

Die Platte kann auch im Gassack eingenäht sein.

In einer Ausführungsform weist der Generatorträger an mindestens zwei gegenüberliegenden Seiten eine Seitenwand auf, dem entsprechende Wände an der Abdeckkappe zugeordnet sind, wobei die Seitenwände des Generatorträgers und der Abdeckkappe übereinander stülpbar sind und Rastelemente aufweisen.. In einer bevorzugten Ausführungsform ist an der Abdeckkappe und am Generatorträger je eine umlaufende Seitenwand vorgesehen.

In einer weiteren Ausgestaltung der Erfindung ist vorgesehen, dass die Seitenwand bzw. die Seitenwände des Generatorträgers über die Seitenwand bzw. die Seitenwände der Abdeckkappe stülpbar sind, und dass an der Seitenwand bzw. an den Seitenwänden des Generatorträgers federnde Rastelemente vorgesehen sind, denen Durchbrüche an der Seitenwand bzw. an den Seitenwänden der Abdeckkappe zugeordnet sind.

Als Mittel zur Halterung der Platte und des mit dieser verbundenen Gassacks sowie zur Halterung des Befestigungsabschnitts des Gasgenerators zwischen dem Generatorträger und der Platte mittels der Rastelemente sind bei einer Ausführungsform an der Seitenwand bzw. an den Seitenwänden der Abdeckkappe Stege vorgesehen, die nach Verrastung der Abdeckkappe mit dem Generatorträger auf die Platte drücken. Die Stege und die Abdeckkappe sind vorzugsweise einstückig ausgebildet.

In einer anderen Ausführungsform ist vorgesehen, dass Rasthaken des Generatorträgers so angeordnet sind, dass sie nach Verrastung der Abdeckkappe mit dem Generatorträger auf die Platte drücken. Bei dieser Ausführungsform können die Stege der vorherigen Ausführungsform entfallen.

Die Platte kann an den Stellen, an denen die Rasthaken des Generatorträgers auf die Platte drücken, Kerben aufweisen. Dadurch kann ein Abrutschen der Rasthaken bei Zugbeanspruchung durch den Gassack verhindert werden. Weiterhin ist es zweckmäßig, dass die Rasthaken an ihrem der Platte zugeordnetem Ende nach außen abgewinkelt sind. Dadurch wird eine Beschädigung der das Gassackfaltpaket umgebenden Folie ausgeschlossen.

Es ist zweckmäßig, dass die Abdeckkappe bei dieser Ausführungsform unter die Platte greifende Haken aufweist, die vorzugsweise als Hakenleisten ausgebildet sind. Zwischen diesen und den Rasthaken ist nach der Montage die Platte eingeklemmt.

Es ist weiterhin zweckmäßig, dass die Seitenwand bzw. die Seitenwände im Bereich der Haken mindestens einen Zapfen aufweisen, dem ein Durchbruch im Generatorträger zugeordnet ist. Dadurch werden die Haken zusätzlich fixiert.

Die Erfindung soll in Ausführungsbeispielen anhand von Zeichnungen erläutert werden. Es zeigen:
- Fig. 1: eine perspektivische Ansicht einer Abdeckkappe und eines gefalteten Gassackpaketes;
- Fig. 2: die perspektivische Ansicht eines Generatorträgers und eines Gasgenerators;
- Fig. 3 u. 4: den Montagevorgang der vorgenannten Baugruppen;
- Fig. 5: die perspektivische Ansicht der Unterseite der Abdeckkappe mit Gassackpaket;
- Fig. 6: einen Schnitt durch die montierte Airbaganordnung mit Stegen in der Kappe;
- Fig. 7: die Einzelheit E der Fig. 6;
- Fig.8: einen Schnitt durch eine montierte Airbaganordnung in einer Ausführung mit Rastelementen als Mittel zur Halterung der Platte;
- Fig. 9: die Einzelheit E der Fig. 8
- Fig. 10: eine perspektivische Ansicht einer weiteren Ausführungsform mit Rastelementen als Mittel zur Halterung der Platte;
- Fig. 11: einen Querschnitt durch einen Abschnitt der Ausführungsform der Fig. 10;
- Fig. 12: eine perspektivische Ansicht einer Ausführungsform, bei der die Abdeckkappe Haken zu ihrer Befestigung am Generatorträger aufweist;
- Fig. 13: einen Querschnitt durch einen Abschnitt der Ausführungsform der Fig. 12;
- Fig. 14: die Unterseite eines Diffusors mit Flansch, der die Platte darstellt, auf der in Richtung der Plattenmitte verlaufende Positionierstege vorgesehen sind,
- Fig. 15: die Unterseite eines Diffusors nach Fig. 14 mit Positionierstegen, die parallel zum Plattenrand verlaufen;
- Fig. 16: einen Ausschnitt aus dem Plattenrand nach Fig. 15 mit einem aufgebogenen Positioniersteg;
- Fig. 17: den Ausschnitt nach Fig. 16 mit montiertem Gassack;
- Fig. 18: die Unterseite des Diffusors nach Fig. 15 mit montiertem Gassack,
- Fig. 19: einen Schnitt durch ein Airbagmodul mit einem Diffusor nach den Figuren 14-18.

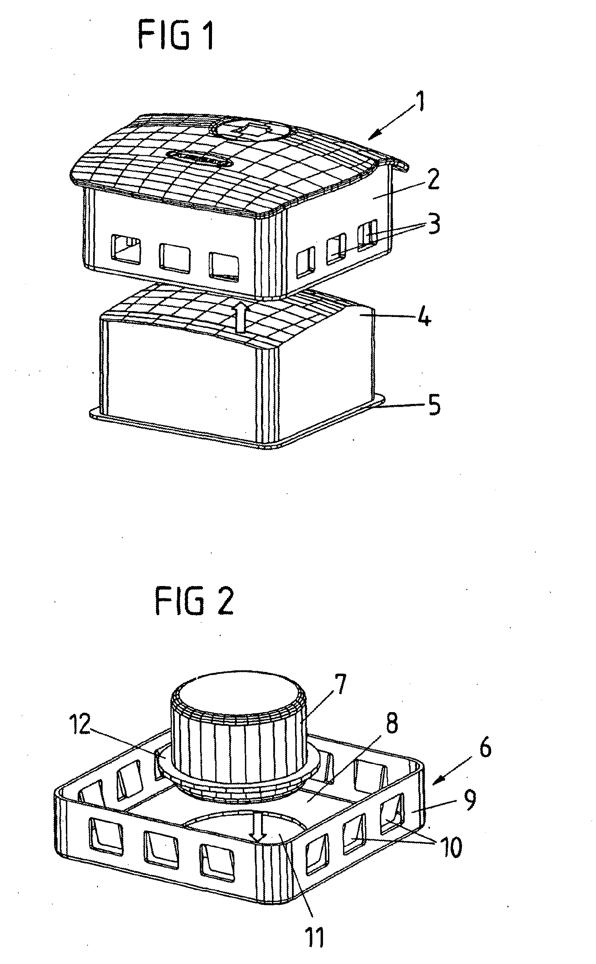

In der Fig. 1 ist eine Abdeckkappe 1 mit einer umlaufenden Seitenwand 2 dargestellt, die Durchbrüche 3 zur Verbindung mit einem Generatorträger aufweist, worauf später eingegangen wird. Die Fig. 1 zeigt weiter einen gefalteten Gassack 4, in den im Bereich seines nicht dargestellten Einblasmundes eine Platte 5 eingenäht ist. Deren Außenabmessung ist bei diesem Ausführungsbeispiel im Bereich des Einblasmundes größer als die Außenabmessung des gefalteten Gassacks. Da der gefaltete Gassack 4 im vorliegenden Fall über die gesamte Höhe die gleiche Außenabmessung hat, ist die Außenabmessung der Platte also größer als die Außenabmessung des gefalteten Gassacks insgesamt.

Die Fig. 2 zeigt einen der Abdeckkappe 1 zugeordneten Generatorträger 6 mit einem Gasgenerator 7. Der Generatorträger 6 weist einen Boden 8 sowie eine umlaufende Seitenwand 9 mit elastisch verformbaren Rastelementen 10 auf, die den Durchbrüchen 3 in der Abdeckkappe 1 zugeordnet sind. Die umlaufende Seitenwand 9 ist so bemessen, dass sie über die Seitenwand 2 stülpbar ist. Im Boden 8 ist ein Durchbruch 11 für den Gasgenerator 7 vorgesehen. Im unteren Bereich des Gasgenerators 7 ist ein Flansch 12 vorgesehen, der einen größeren Außendurchmesser als der Durchbruch 11 aufweist.

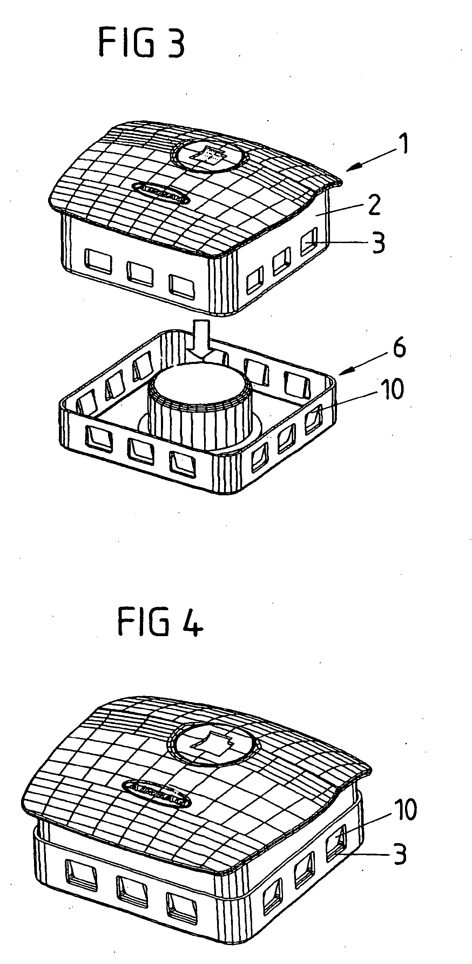

Bei der Montage wird zunächst der gefaltete Gassack 4 in die Abdeckkappe 1 eingeschoben, was in der Fig.1 durch einen Pfeil angedeutet worden ist. Weiterhin wird der Gasgenerator 7 in den Generatorträger 6 eingesetzt, was in der Fig. 2 ebenfalls durch einen Pfeil angedeutet worden ist, bis er mit seinem Flansch 12 auf dem Boden 8 aufliegt, wie es aus der Fig. 3 ersichtlich ist. Bei der weiteren Montage wird die Abdeckkappe 1 in den Generatorträger 6 eingesetzt, was in der Fig. 3 ebenfalls durch einen Pfeil angedeutet worden ist. Dabei werden die Rastelemente 10 des Generatorträgers 6 durch die umlaufende Seitenwand 2 der Abdeckkappe 1 nach außen gedrückt, bis sie durch weiteres Eindrücken der Abdeckkappe 1 in den Generatorträger schließlich in die Durchbrüche 3 einrasten, wie es in der Fig. 4 dargestellt ist. Durch diesen einfachen Montagevorgang ist nun sowohl der Gassack als auch der Gasgenerator fixiert worden. In welcher Weise diese Fixierung erfolgt, soll anhand der weiteren Figuren erläutert werden.

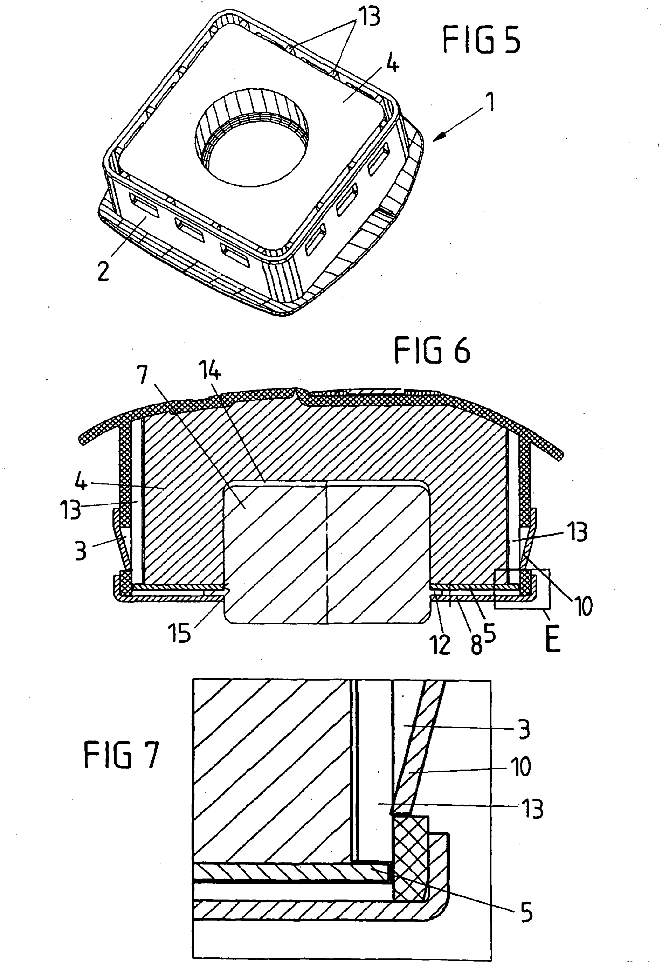

In der aus der Fig. 5 erkennbaren Ansicht der Unterseite der Abdeckkappe 1 ist der gefaltete Gassack 4 ohne die Platte 5 dargestellt worden, damit an der Innenseite der umlaufenden Seitenwand 2 vorhandene Stege 13 zu erkennen sind. Aus den Figuren 6 und 7 ist die Wirkungsweise der Stege 13 als Mittel zur Halterung der Platte 5 ersichtlich. Der Gassack 4 ist so gefaltet, dass in seiner Mitte ein Freiraum 14 für den Gasgenerator 7 vorhanden ist.

Die Platte 5 hat in der Mitte einen Durchbruch 15 für den Gasgenerator 7. Aus der Fig. 6 ist ersichtlich, dass der Flansch 12 des Gasgenerators 7 nach der Montage zwischen dem Boden 8 des Generatorträgers und der Platte 5 liegt. Nach dem Einrasten der Rastelemente 10 in die Durchbrüche 3 drücken die Stege 13 auf den Außenrand der Platte 5, wodurch sowohl der gefaltete Gassack 4, der mit der Platte 5 verbunden ist, als auch der Gasgenerator 7 über seinen Flansch 12 fixiert wird.

Es ist ersichtlich, dass die Verbindung der genannten Baugruppen durch einen einzigen Rastvorgang ermöglicht wird.

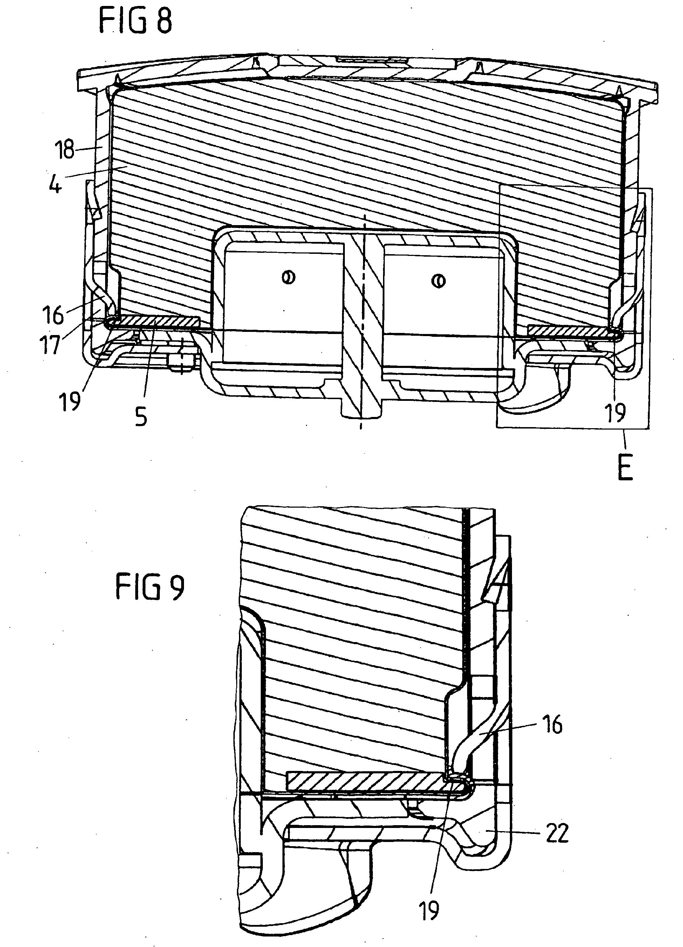

Bei der Ausführungsform der Fig.8 erfolgt die Fixierung der Platte 5 nicht mittels Stegen sondern mittels Rastelementen 16, die nach der Montage durch Durchbrüche 17 in der umlaufenden Seitenwand 18 der Abdeckkappe greifen und auf die Platte 5 drücken. Um ein seitliches Verschieben der Rastelemente 16 auf der Platte 5, insbesondere bei Zugbeanspruchung durch den Gassack 4 zu verhindern, sind am Rand der Platte 5 Kerben 19 vorgesehen, in die die Rastelemente 16 eingreifen. In der Fig. 9 sind die Kerben 19 und die Rastelemente 16 nochmals vergrößert dargestellt worden. Bei dieser Ausführungsform weist die Platte 5 nur im Bereich des Einblasmundes eine größere Außenabmessung als der gefaltete Gassack 4 auf, während dieser weiter oben etwa die gleiche Außenabmessung wie die Platte 5 aufweist.

Diese Ausführungsform stellt gegenüber der Ausführungsform der vorhergehenden Figuren eine weitere Vereinfachung dar, da die Stege entfallen können.

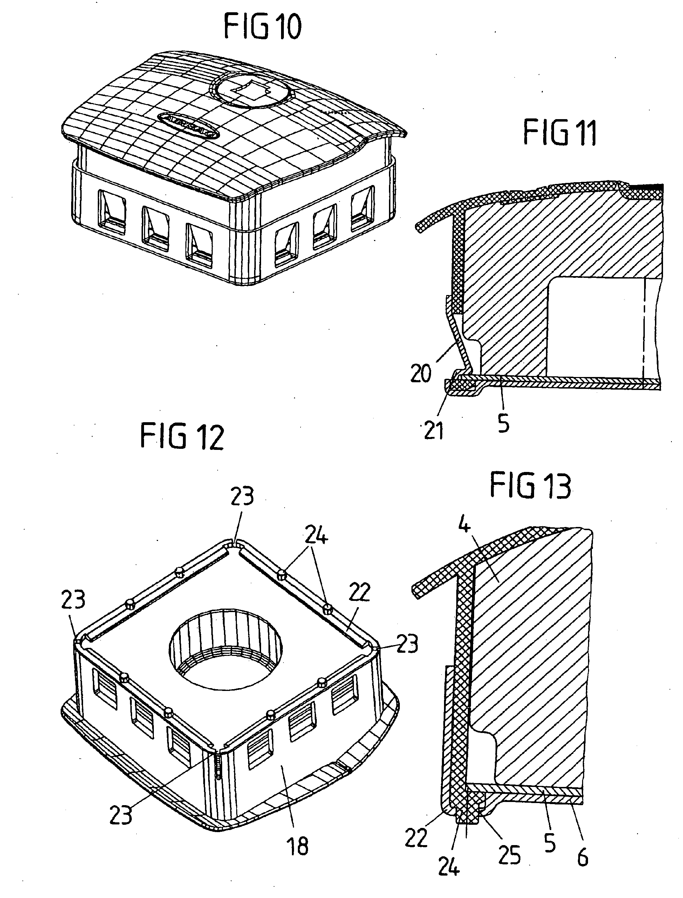

In den Figuren 10 und 11 ist eine Variante der Ausführungsform der Figuren 8 und 9 dargestellt. Dort sind Rastelemente 20 vorgesehen, die an ihrem Ende, das der Platte 5 zugeordnet ist, nach außen abgewinkelt sind. Ein abgewinkelter Abschnitt 21 liegt auf dem Rand der Platte 5 auf, und, drückt nach der Montage auf diese Platte. Bei dieser Variante kann mit Sicherheit ausgeschlossen werden, dass die Folie eines unter Vakuum gefalteten Gassacks bei der Montage beschädigt wird.

In den Figuren 12 und 13 ist dargestellt, wie bei der Ausführungsform der Figuren 8 bis 11 die Abdeckkappe 1 mit dem Generatorträger verbunden ist. Die Abdeckkappe weist an ihrem unteren Ende Haken 22 auf. Wie aus der Fig. 12 ersichtlich ist, haben die Haken 22 die Form von Hakenleisten. Für die Montage des gefalteten Gassacks 4 mit der an diesem befestigten Platte 5 weist die umlaufende Seitenwand 18 an ihren Ecken Schlitze 23 auf, so dass sie elastisch verformt, d.h. zur Seite gebogen werden kann. Nach der Montage des Gassacks rasten die Haken 22 unterhalb der Platte 5 ein. Zur zusätzlichen Fixierung der Haken 22 im Generatorträger 6 weisen die Haken 22 Zapfen 24 auf, die durch entsprechend Durchbrüche 25 im Generatorträger greifen.

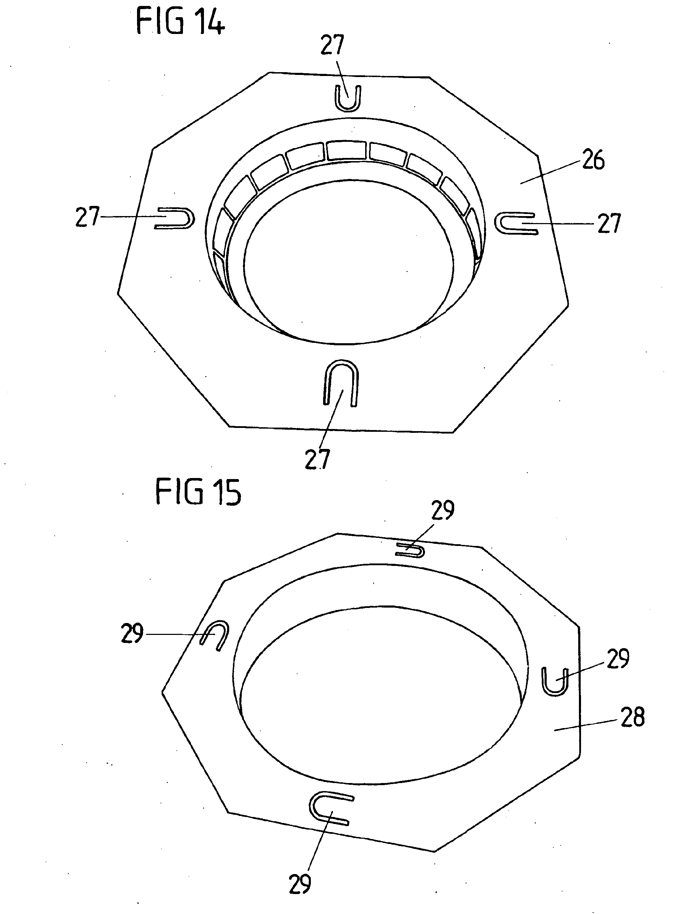

In der Fig. 14 ist die Unterseite eines Diffusors 32 dargestellt, der einen Flansch 26 als platte im erfindungsgemäßen Sinn aufweist. Dieser Flansch weist Positionierstege 27 auf, die in Richtung der Mitte des Diffusors 32 und damit des Flansches verlaufen.

Bei der Ausführungsform der Fig. 15 verlaufen die Positionierstege 29 auf einem Flansch 28 abweichend von der Ausführungsform der Fig. 14 in Richtung des Plattenrandes.

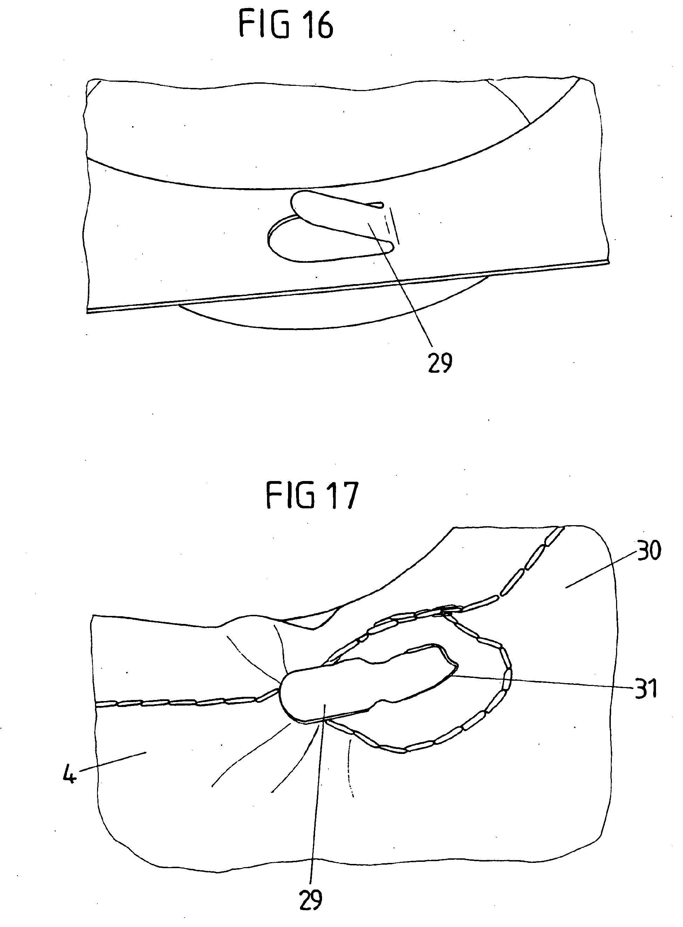

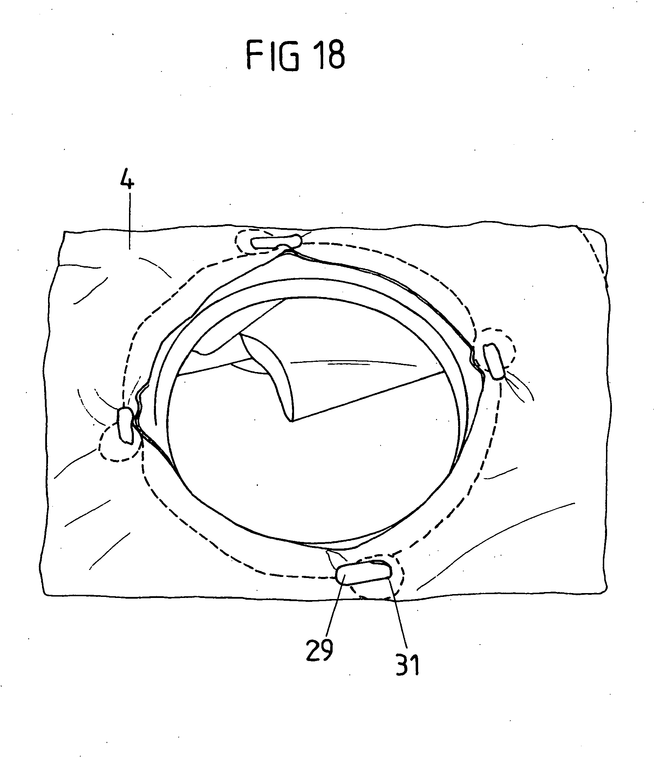

Die Positionierstege werden vor der Montage des Gassacks aufgebogen, wie es in der Fig. 16 am Beispiel eines Positioniersteges 29 dargestellt ist. Der Gassack 30 weist im Bereich des Einblasmundes Durchbrüche 31 auf, von denen in der Fig. 17 ein Durchbruch erkennbar ist. Der Gassack wird an diesen Stellen unter die Positionierstege 29 geschoben und anschließend werden die Positionierstege in die ursprüngliche Position gebogen, wie sie aus den Figuren 15 und 18 ersichtlich ist.

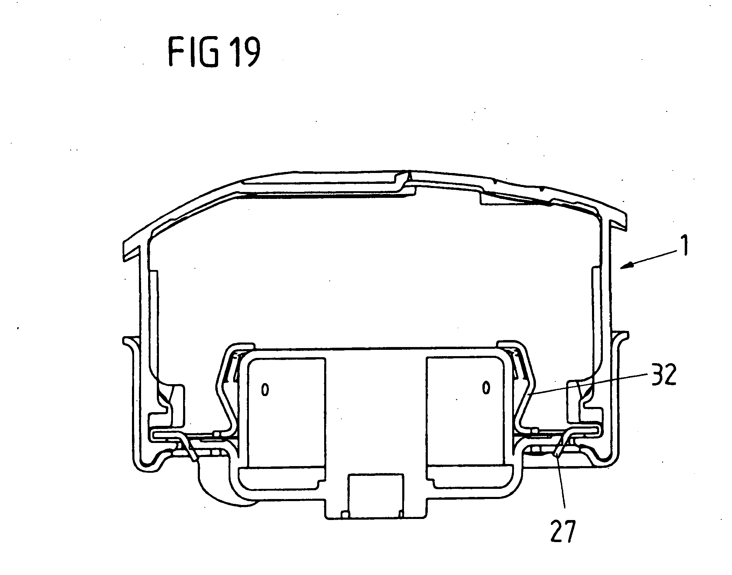

Aus der Fig. 19 ist die Anordnung des Diffusors 32 in einem Airbagmodul erkennbar. Die Figur zeigt das Airbagmodul ohne Gassack, so dass die Positionierstege analog zu der in Fig. 16 dargestellten Ausführungsform aufgebogen sind.

## Patentansprüche

1. Airbagmodul mit einem Gasgenerator (7), der mindestens einen seitlich über diesen hinausragenden Befestigungsabschnitt (12) aufweist, mit einem Generatorträger (6), mit einem Gassack (4) mit Einblasmund, mit einer Abdeckkappe (1), und mit Rastelementen (10, 16) zur Verbindung des Generatorträgers (8) mit der Abdeckkappe (1),
**dadurch gekennzeichnet,**
**dass** der Gassack (4) im Bereich des Einblasmundes eine Platte (5) aufweist, dass die Platte (5) eine Öffnung (15) für den Gasgenerator (7) aufweist, und dass Mittel (13, 16) zur Halterung der Platte (5) und des mit dieser verbundenen Gassacks (4) sowie zur Halterung des zwischen dem Generatorträger (6) und der Platte (5) liegenden Befestigungsabschnitts (12) des Gasgenerators (7) mittels der Rastelemente (10, 16) vorgesehen sind, wobei die Platte (5) mindestens im Bereich dieser Mittel (13, 16) zur Halterung größer ist als die Außenabmessung des gefalteten Gassacks (4) im Bereich des Einblasmundes.

2. Airbagmodul nach Anspruch 1, **dadurch gekennzeichnet, dass** als Platte ein Flansch eines Diffusors vorgesehen ist.

3. Airbagmodul nach Anspruch 1 oder 2, **dadurch gekennzeichnet, dass** die Platte (5) im Gassack (4) eingenäht ist.

4. Airbagmodul nach Anspruch 1 oder 2, **dadurch gekennzeichnet, dass** die Platte (26, 28) zur Befestigung des Gassacks (4) Positionierstege (27,29) aufweist.

5. Airbagmodul nach Anspruch 4, **dadurch gekennzeichnet, dass** als Positionierstege (27, 29) Abschnitte der Platte (26, 28) vorgesehen sind, wobei die Abschnitte teilweise von der Platte (26, 28) getrennt und gegenüber dieser zumindest teilweise verformbar sind.

6. Airbagmodul nach Anspruch 4 oder 5, **dadurch gekennzeichnet, dass** die Positionierstege (29) zumindest annähernd parallel zum Plattenrand verlaufen.

7. Airbagmodule nach mindestens einem der Ansprüche 4 bis 6, **dadurch gekennzeichnet, dass** die Positionierstege (27) zumindest annähernd in Richtung der Plattenmitte verlaufen.

8. Airbagmodule nach mindestens einem der vorhergehenden Ansprüche, **dadurch gekennzeichnet, dass** der Generatorträger (6) an mindestens zwei gegenüberliegenden Seiten eine Seitenwand (9) aufweist, dem entsprechende Wände (2) an der Abdeckkappe (1) zugeordnet sind, wobei die Seitenwände (2, 9) des Generatorträgers und der Abdeckkappe übereinander stülpbar sind und die Rastelemente (10, 16) aufweisen.

9. Airbagmodule nach mindestens einem der vorhergehenden Ansprüche, **dadurch gekennzeichnet, dass** an der Abdeckkappe (1) und am Generatorträger (6) je eine umlaufende Seitenwand (2, 9) vorgesehen ist.

10. Airbagmodule nach mindestens einem der vorhergehenden Ansprüche, **dadurch gekennzeichnet, dass** die Seitenwand (9) bzw. die Seitenwände des Generatorträgers (6) über die Seitenwand (2) bzw. die Seitenwände der Abdeckkappe (1) stülpbar sind, und dass an der Seitenwand (9) bzw. an den Seitenwänden des Generatorträgers (6) federnde Rastelemente (10, 16) vorgesehen sind, denen Durchbrüche (3, 17) an der Seitenwand (2, 18) bzw. an den Seitenwänden der Abdeckkappe (1) zugeordnet sind.

11. Airbagmodule nach mindestens einem der Ansprüche 8 bis 10, **dadurch gekennzeichnet, dass** als Mittel zur Halterung der Platte (5) und des mit dieser verbundenen Gassacks (4) sowie zur Halterung des Befestigungsabschnitts (12) des Gasgenerators (7) zwischen dem Generatorträger (6) und der Platte (5) mittels der Rastelemente (10) an der Seitenwand (2) bzw. an den Seitenwänden der Abdeckkappe (1) Stege (13) vorgesehen sind, die nach Verrastung der Abdeckkappe (1) mit dem Generatorträger (6) auf die Platte (5) drücken.

12. Airbagmodule nach Anspruch 11, **dadurch gekennzeichnet, dass** die Stege (13) und die Abdeckkappe (1) einstückig ausgebildet sind.

13. Airbagmodule nach mindestens einem der Ansprüche 8 bis 11, **dadurch gekennzeichnet, dass** Rasthaken (16, 20), des Generatorträgers (6) so angeordnet sind, dass sie nach Verrastung der Abdeckkappe (1) mit dem Generatorträger (6) auf die Platte (5) drücken.

14. Airbagmodule nach Anspruch 13, **dadurch gekennzeichnet, dass** die Platte (5) an den Stellen, an denen die Rasthaken (16, 20) des Generatorträgers (6) auf die Platte (5) drücken, Kerben (19) aufweisen.

15. Airbagmodule nach Anspruch 13 oder 14, **dadurch gekennzeichnet, dass** die Rasthaken (20) an ihrem der Platte (5) zugeordneten Ende nach außen abgewinkelt sind.

16. Airbagmodule nach Anspruch 13 oder 14, **dadurch gekennzeichnet, dass** die Abdeckkappe (1) unter die Platte (5) greifende Haken (22) aufweist.

17. Airbagmodule nach Anspruch 16, **dadurch gekennzeichnet, dass** die Haken (22) als Hakenleisten ausgebildet sind.

18. Airbagmodule nach mindestens einem der Ansprüche 15 oder 16, **dadurch gekennzeichnet, dass** die Seitenwand (18) bzw. die Seitenwände im Bereich der Haken (22) mindestens einen Zapfen (24) aufweisen, dem ein Durchbruch (25) im Generatorträger (6) zugeordnet ist.

## Claims

1. Airbag module having a gas generator (7), which has at least one fastening portion (12) projecting laterally beyond the latter, having a generator support (6), having an airbag (4) with inflation opening, having a cover cap (1), and having latching elements (10, 16) for connecting the generator support (8) to the cover cap (1), **characterized in that** the airbag (4) has a plate (5) in the region of the inflation opening, **in that** the plate (5) has an opening (15) for the gas generator (7), and **in that** means (13, 16) for holding the plate (5) and the airbag (4) connected thereto, and for holding the fastening portion (12) of the gas generator (7), situated between the generator support (6) and the plate (5), by means of the latching elements (10, 16) are provided, the plate (5), at least in the region of these holding means (13, 16), being larger than the external dimensioning of the folded airbag (4) in the region of the inflation opening.

2. Airbag module according to Claim 1, **characterized in that**, as the plate, a flange of a diffuser is provided.

3. Airbag module according to Claim 1 or 2, **characterized in that** the plate (5) is sewn into the airbag (4).

4. Airbag module according to Claim 1 or 2, **characterized in that**, for the fastening of the airbag (4), the plate (26, 28) has positioning webs (27, 29).

5. Airbag module according to Claim 4, **characterized in that**, as the positioning webs (27, 29), portions of the plate (26, 28) are provided, the portions being partially separated from the plate (26, 28) and being at least partially deformable relative to the latter.

6. Airbag module according to Claim 4 or 5, **characterized in that** the positioning webs (29) run at least approximately parallel to the plate edge.

7. Airbag module according to one of Claims 4 to 6, **characterized in that** the positioning webs (27) run at least approximately in the direction of the plate middle.

8. Airbag module according to at least one of the preceding claims, **characterized in that** the generator support (6), on at least two opposite sides, has a side wall (9), to which corresponding walls (2) on the cover cap (1) are assigned, the side walls (2, 9) of the generator support and of the cover cap being able to be slipped one over the other and having the latching elements (10, 16).

9. Airbag module according to at least one of the preceding claims, **characterized in that** a circumferential side wall (2, 9) is respectively provided on the cover cap (1) and on the generator support (6).

10. Airbag module according to at least one of the preceding claims, **characterized in that** the side wall(s) (9) of the generator support (6) can be slipped over the side wall(s) (2) of the cover cap (1), and **in that** on the side wall(s) (9) of the generator support (6) resilient latching elements (10, 16) are provided, to which apertures (3, 17) on the side wall(s) (2, 18) of the cover cap (1) are assigned.

11. Airbag module according to at least one of Claims 8 to 10, **characterized in that**, as the means for holding the plate (5) and the airbag (4) connected thereto, and for holding the fastening portion (12) of the gas generator (7) between the generator support (6) and the plate (5) by means of the latching elements (10), webs (13) are provided on the side wall(s) (2) of the cover cap (1), which webs press upon the plate (5) after the cover cap (1) has been latch-locked to the generator support (6).

12. Airbag module according to Claim 11, **characterized in that** the webs (13) and the cover cap (1) are configured in one piece.

13. Airbag module according to at least one of Claims 8 to 11, **characterized in that** latching hooks (16, 20) of the generator support (6) are arranged such that they press upon the plate (5) after the cover cap (1) has been latch-locked to the generator support (6).

14. Airbag module according to Claim 13, **characterized in that**, at those places at which the latching hooks (16, 20) of the generator support (6) press upon the plate (5), the plate (5) has notches (19) .

15. Airbag module according to Claim 13 or 14, **characterized in that** the latching hooks (20), at their end assigned to the plate (5), are angled off outward.

16. Airbag module according to Claim 13 or 14, **characterized in that** the cover cap (1) has hooks (22) which reach under the plate (5).

17. Airbag module according to Claim 16, **characterized in that** the hooks (22) are configured as hook strips.

18. Airbag module according to at least one of Claims 15 or 16, **characterized in that** the side wall(s) (18), in the region of the hooks (22), have at least one pin (24), to which an aperture (25) in the generator support (6) is assigned.

## Revendications

1. Module airbag avec un générateur de gaz (7), qui présente au moins une section de fixation (12) dépassant latéralement de celui-ci, avec un support de générateur (6), avec un sac de gaz (4) avec embout de gonflage, avec un capot (1) et avec des éléments d'arrêt (10, 16) destinés à relier le support de générateur (6) au capot (1),
**caractérisé en ce**
**que** le sac de gaz (4) présente une plaque (5) dans la zone de l'embout de gonflage, en ce que la plaque (5) présente une ouverture (15) pour le générateur de gaz (7), et en ce que sont prévus des moyens (13, 16) destinés au maintien de la plaque (5) et du sac de gaz (4) relié à celle-ci ainsi que destinés au maintien de la section de fixation (12) du générateur de gaz (7), située entre le support de générateur (6) et la plaque (5), au moyen des éléments d'arrêt (10, 16), la plaque (5) étant, au moins dans la zone de ces moyens (13, 16) destinés au maintien, plus grande que la dimension extérieure du sac de gaz (4) plié dans la zone de l'embout de gonflage.

2. Module airbag selon la revendication 1, **caractérisé en ce qu'**une bride d'un diffuseur est prévue comme plaque.

3. Module airbag selon la revendication 1 ou 2, **caractérisé en ce que** la plaque (5) est cousue dans le sac de gaz (4).

4. Module airbag selon la revendication 1 ou 2, **caractérisé en ce que** la plaque (26, 28) présente des languettes de positionnement (27, 29) destinées à la fixation du sac de gaz (4).

5. Module airbag selon la revendication 4, **caractérisé en ce que** des sections de la plaque (26, 28) sont prévues comme languettes de positionnement (27, 29), les sections étant partiellement séparées de la plaque (26, 28) et déformables au moins partiellement par rapport à celle-ci.

6. Module airbag selon la revendication 4 ou 5, **caractérisé en ce que** les languettes de positionnement (29) s'étendent au moins à peu près de manière parallèle au bord de la plaque.

7. Module airbag selon au moins l'une quelconque des revendications 4 à 6, **caractérisés en ce que** les languettes de positionnement (27) s'étendent au moins à peu près dans le sens du milieu de la plaque.

8. Module airbag selon au moins l'une quelconque des revendications précédentes, **caractérisés en ce que** le support de générateur (6) présente sur au moins deux côtés opposés une paroi latérale (9), à laquelle sont associées des parois (2) correspondantes au niveau du capot (1), les parois latérales (2, 9) du support de générateur et du capot pouvant être retournées les unes sur les autres et présentant les éléments d'arrêt (10, 16).

9. Module airbag selon l'une quelconque des revendications précédentes, **caractérisés en ce qu'**il est prévu respectivement une paroi latérale (2, 9) périphérique au niveau du capot (1) et au niveau du support de générateur (6).

10. Module airbag selon au moins l'une quelconque des revendications précédentes, **caractérisés en ce que** la paroi latérale (9) et/ou les parois latérales du support de générateur (6) peuvent être retournées au-dessus de la paroi latérale (2) et/ou des parois latérales du capot (1) et **en ce qu'**au niveau de la paroi latérale (9) et/ou au niveau des parois latérales du support de générateur (6), des éléments d'arrêt (10, 16) élastiques sont prévus, auxquels sont associés des passages (3, 17) au niveau de la paroi latérale (2, 18) et/ou au niveau des parois latérales du capot (1).

11. Module airbag selon au moins l'une quelconque des revendications 8 à 10, **caractérisés en ce que** des languettes (13), qui appuient sur la plaque (5) après enclenchement du capot (1) avec le support de générateur (6), sont prévues comme moyens destinés au maintien de la plaque (5) et du sac de gaz (4) relié à celle-ci ainsi que destinés au maintien de la section de fixation (12) du générateur de gaz (7) entre le support de générateur (6) et la plaque (5) au moyen des éléments d'arrêt (10) au niveau de la paroi latérale (2) et/ou au niveau des parois latérales du capot (1).

12. Module airbag selon la revendication 11, **caractérisés en ce que** les languettes (13) et le capot (1) sont réalisés d'un seul tenant.

13. Module airbag selon au moins l'une quelconque des revendications 8 à 11, **caractérisés en ce que** des crochets d'arrêt (16, 20) du support de générateur (6) sont disposés de telle sorte qu'ils appuient sur la plaque (5) après enclenchement du capot (1) avec le support de générateur (6).

14. Module airbag selon la revendication 13, **caractérisés en ce que** la plaque (5) présente des encoches (19) aux endroits où les crochets d'arrêt (16, 20) du support de générateur (6) appuient sur la plaque (5).

15. Module airbag selon la revendication 13 ou 14, **caractérisés en ce que** les crochets d'arrêt (20) sont coudés vers l'extérieur au niveau de leur extrémité associée à la plaque (5).

16. Module airbag selon la revendication 13 ou 14, **caractérisés en ce que** le capot (1) présente des crochets (22) venant en prise sous la plaque (5).

17. Module airbag selon la revendication 16, **caractérisés en ce que** les crochets (22) sont réalisés sous forme de barres à crochets.

18. Module airbag selon au moins l'une quelconque des revendications 15 ou 16, **caractérisés en ce que** la paroi latérale (18) et/ou les parois latérales présentent dans la zone des crochets (22) au moins un téton (24), auquel est associé un passage (25) dans le support de générateur (6).
